# EUROPEAN PATENT SPECIFICATION

(11) **EP 0 792 194 B1**
(45) Date of publication and mention of the grant of the patent: **23.09.1998**
(21) Application number: 95941373.3
(22) Date of filing: 13.11.1995
(51) Int. Cl.: B05D 1/26, B05C 11/10, G11B 5/848

(54) **MAGNETIC DISPERSION CONDITIONING PROCESS**
MAGNETISCHEDISPERSIONSKONDITIONIERUNGSVERFAHREN
PROCEDE DE TRAITEMENT D'UNE DISPERSION DE PARTICULES MAGNETIQUES

(30) Priority: 14.11.1994 US 339028
(43) Date of publication of application: 03.09.1997
(73) Proprietor: MINNESOTA MINING AND MANUFACTURING COMPANY, St. Paul, Minnesota 55133-3427 (US)
(72) Inventor: SERAFIN, Mark, Saint Paul, MN 55133-3427 (US); GUNTHER, John R., Saint Paul, MN 55133-3427 (US); BRANDT, Daniel W., Saint Paul, MN 55133-3427 (US); LAM, Joseph H., Saint Paul, MN 55133-3427 (US); ROTTO, Nelson T., Saint Paul, MN 55133-3427 (US); EBNER, Stephen R., Saint Paul, MN 55133-3427 (US)
(74) Representative: Meyers, Hans-Wilhelm, Dr.Dipl.-Chem.
(86) International application number: US9514522
(87) International publication number: WO9614941

(56) References cited:
- US-A- 5 028 450
- US-A- 5 244 149
- US-A- 5 320 679
- US-A- 5 329 964

## Description

### FIELD OF THE INVENTION

This invention relates to a process and an apparatus for conditioning dispersions of hard, non-compliant particles, especially magnetic pigment dispersions, prior to coating these dispersions during production of coated products, especially magnetic media products.

### BACKGROUND OF THE INVENTION

In manufacture of magnetic recording elements, such as audio or video tapes, computer diskettes, etc, a dispersion of magnetic pigment particles, polymeric binder, and various other additives in a solvent or combination of solvents is typically coated onto a flexible or rigid substrate. Coating quality can affect the performance of the magnetic recording element. Therefore, various techniques have been employed in tie preparation of the coating dispersion.

U.S. Patent 4,728,405, for example, discloses a process of continuously recirculating a dispersion through an ultrasonic field before filtration and coating. The patent teaches that this increases filter life and provides improvements in coating surface smoothness and squareness ratio.

U.S. Patent 5,244,149 teaches a dispersion distribution device and method that uses impingement to avoid recirculation regions and variable residence time, wherein a coating liquid is supplied to a distribution cavity from both sides of the cavity through a delivery line. The cavity is a slot which expands from the length of the liquid entrance of the cavity to a longer length of the cavity exit. The two streams of liquid impinge against each other inside the cavity and spread out along the contour of the cavity.

Japanese Kokai Publication 62-006612 teaches reducing dispersion viscosity by adding more solvent followed by processing the high solvent content dispersion through a homogenizer.

### SUMMARY OF THE INVENTION

The present invention provides a novel method of preconditioning dispersions comprising hard, non-compliant particles. The method is especially effective in preparing magnetic coating dispersion that is very effective in both removing large particulates and contaminants, which may cause errors during formatting or recording of the magnetic recording element, and also reducing the viscosity of the coating dispersion to facilitate orientation of the magnetic pigment particles.

The present invention improves the mixing of the dispersion and lowers the viscosity of the dispersion encompared to the device and the method according to US patent 5,244,149.

The inventive process comprises the steps of:
a) combining the dispersion components to form a semi-dispersed mixture;
b) pressurizing the mixture;
c) forcing the pressurized mixture through at least two impingement chamber assemblies, wherein the mixture is divided into at least two streams, each stream is forced through an orifice assembly, and on exit from the orifice assembly the streams impinge upon each other;
d) optionally, filtering the impinged mixture; and
e) immediately coating the fully processed dispersion onto a substrate.

To avoid stagnation of the processed dispersion during the coating step, according to one embodiment of this invention, the dispersion is recirculated from the coating apparatus through the impingement and filtering steps.

The process may also be used advantageously in the production of backcoat dispersions for magnetic recording elements. These backcoat dispersions comprise carbon black or another pigment in a polymeric binder. When used in preparation of a backcoat dispersion, the method prevents clumps of pigment which may cause a rougher backcoat surface and indentations on the magnetic layer when magnetic tape is rolled up. These indentations can add to errors during reading or writing of information on the magnetic layer.

### BRIEF DESCRIPTION OF THE DRAWINGS

Figure 1 is a schematic view of the process of the invention including mixing vessel, high pressure pump, series of impingement assemblies, series of ultra-restrictive filters and coating element.

Figures 2 is a schematic view of an individual impingement chamber assembly.

Figures 3-5 are cross-sectional side views of variations of impingement orifice assemblies.

Figure 6 is a cross-sectional view of an alternative input manifold.

### DETAILED DESCRIPTION OF THE INVENTION

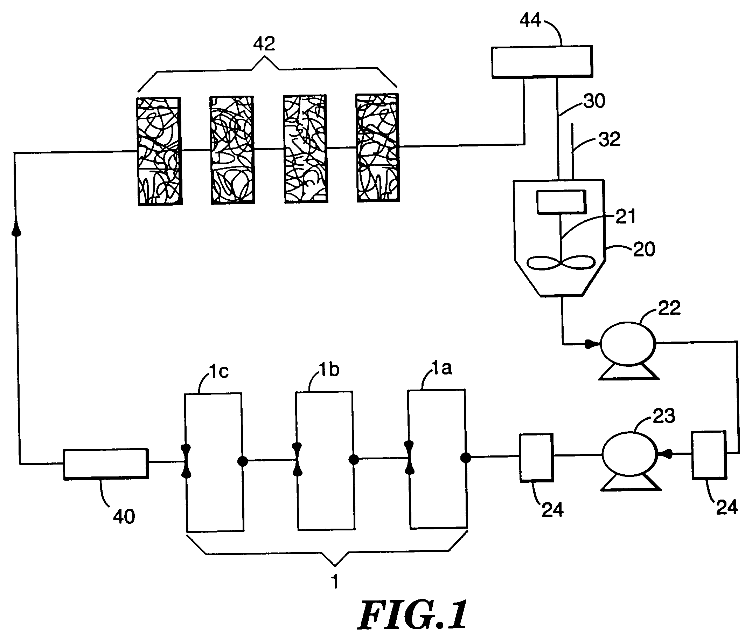

With reference to Figure 1, the process comprises adding hard, noncompliant particles, a solvent, a polymeric binder and any other desired additive, such as surfactants, wetting agents, cross-linking agents, etc., to a vessel **20**. The components are mixed using a mixing apparatus **21**, such as a high speed, dissolver type mixer, sand mill, ball mill, etc., into a semi-dispersed premix. The process mix preferably contains up to 50% by weight solids, preferably 20-50% by weight solids. The percent solids by volume may be up to about 20%, preferably 5-20%, more preferably 10-17%. The particle may be any hard, substantially non-compliant particle such as magnetic pigments, such as iron oxides, barrium ferrite, metal particles, and chromium dioxide; carbon black; many color pigments, such as, for example phthalocyanines, such as copper phthalocyanine, nigrosine dye, Aniline Blue, Chrome Yellow, Dupont Oil Red (from DuPont), Monoline Yellow, Sunfast Blue, Sun Yellow, Sun Red and other pigments available from Sun Chemical Co., Harmon Quindo Red, Regal 300, Fluorol Yellow 088, Fluorol Green Gold 084, Lumogen Yellow S 0790, Ultramarine Blue, Ultramarine Violet, Ferric Ferrocyanide, and other pigments available from BASF, Malachite Green Oxalate, lamp black, Rose Bengal, and Malastral Red; titanium dioxide; abrasive materials, such as aluminum oxide, silicon carbide, alumina, cerium oxide, zirconia, silica, boron carbide, and garnet; etc.

According to one preferred embodiment the pigment is a magnetic pigment such as a magnetic iron oxide, magnetic metal particles, barium ferrite, etc. These pigments are coated with a polymeric binder onto a substrate to form a magnetic recording element. According to a second preferred embodiment the pigment is carbon black and the coating dispersion is coated onto the backside of a magnetic recording element.

The premix is then fed to a high pressure pump **23**, preferably via a low pressure pump **22** capable of generating approximately 50 to 150 psi (300-1000 kPa) of liquid head pressure. The pressure of the process stream is raised to greater than about 2000 psi (14 MPa) by the high pressure pump **23**. The system functions best when abrasive resistant check valves **24**, which prevent backflow of the process stream, are located both before and after the high pressure pump. The inventors have found that having a larger, seat for the check wedge or ball are effective in preventing particles from bridging between the seat and the check wedge or ball thereby causing backflow of the process material. Suitable check valves are disclosed for example in copending U.S. Application Serial No. 08/339,027.

The pressurized process stream then enters impingement zones **1**. The minimum number of individual jet impingement chamber assemblies **1a, etc.** is one, but there are preferably multiple individual jet impingement chamber assemblies in series. The jet impingement process effectively reduces the viscosity of the magnetic dispersion. The reduced viscosity is beneficial in coating the magnetic dispersion onto a substrate as it may facilitate orientation of the magnetic pigment particles.

According to one embodiment the processed magnetic dispersion may be coated onto a substrate immediately after passing through the jet impingement chambers or immediately after exiting any subsequent filters which are in the process stream. Immediately in this situation means that the dispersion is coated before reagglomeration or flocculation of the particles occurs and before viscosity reduction effects are lost. The precise timing depends upon the dispersion used. Preferably the dispersion is coated not more than 10 minutes after processing, more preferably not more than 5 minutes after processing, more preferably still not more than 1 minute after processing, and most preferably within 30 seconds of processing. However, conveyance of the dispersion to the coating apparatus in less than about 1-2 seconds has been found to work well.

The impinged dispersion after exiting the jet impingement chambers, optionally, passes through a heat exchanger **40** to reduce the temperature of the dispersion. The heat exchanger may be helpful in preventing volatilization of the solvent and reaction of any reactive components which may be present. A Brazepak™ ITT Standard heat exchanger has been found to work well.

After cooling, or after exiting the last impingement zone if the cooling step is omitted, the dispersion is preferably filtered. Any filtering system typically used in a magnetic dispersion coating process may be used. However, the dispersion is preferably passed through ultrarestrictive filters **42**. Ultrarestrictive filters, for the purpose of this invention, are filters capable of removing 0.8 µm particles at about 99% efficiency. Preferably, the filters used in this process remove about 99% of 0.6 µm particles, more preferably about 99% of about 0.5 µm particles. Use of such ultrarestrictive filters with dispersions of relatively high solids content, 20-50% by weight, is feasible without need for unduly frequent changes of filters due to the decrease in viscosity and the breakdown of particle agglomerations attained in the jet impingement portion of the process.

Commercially available examples of suitable ultrarestrictive filters include Nippon Roki HT-04, HT-05, HT-06 and HT-08. Use of a series of these filters may be desirable, and four of these filters, having increasing restrictivity, in series has been found to work well.

After passing through the ultrarestrictive filters, the dispersion proceeds immediately to the coating apparatus **44**. Again, coating should occur before reagglomeration or loss of viscosity reduction effects. Any known method and apparatus for coating magnetic dispersions may be used. Suitable examples are disclosed in U.S. Patents 4,327,130, 4,345,543, 4,357,899, 4,387,124, 4,442,144, and 4,475,478, incorporated herein by reference.

To avoid stagnation of the processed dispersion, it may be desirable when using certain coating methods to recirculate the dispersion from the coating apparatus back through the impingement and filtering steps. The recycle stream **30** is preferably combined with the feed stream **32** before the dispersion is pressurized for impingement processing.

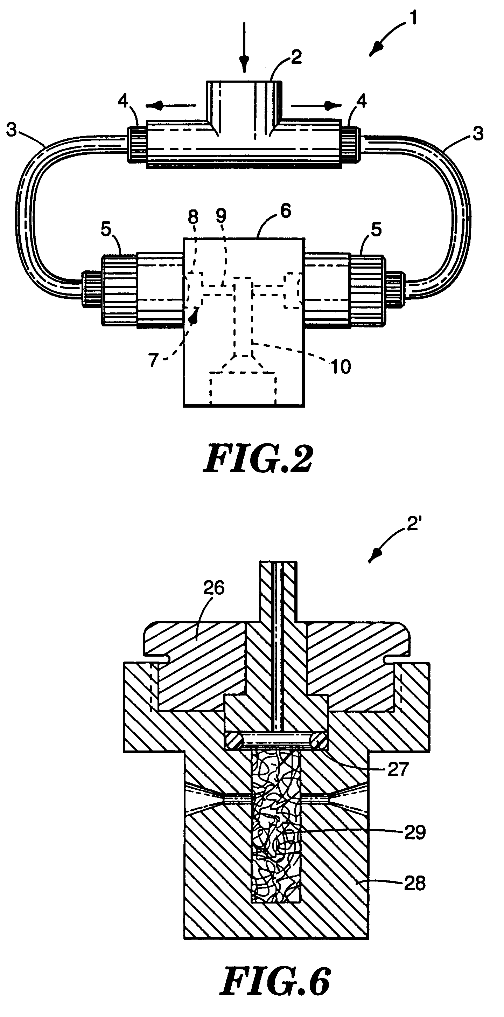

Referring to Figure 2, the individual jet impingement chamber assemblies include an input manifold **2** in which the process stream is split into two or more individual streams, an output manifold **6** which contains the impingement chamber in which the individual streams are recombined, and a passage **3** directing the individual streams into the impingement chamber. Figure 2 shows a preferred construction of the jet impingement chamber assembly where the process stream is divided into two independent streams. The input manifold **2** and the output manifold **6** are connected to high pressure tubing **3** by means of gland nuts **4** and **5**. The output manifold **6** itself is preferably capable of disassembly so that the orifice cones **8** and extension tubes **9** may be replaced if different parameters are desired or if the parts are worn or plugged. The high pressure tubing **3** is optionally equipped with thermocouples and pressure sensing devices which enable the operator of the system to detect flow irregularities such as plugging.

In the impingement chamber the streams are recombined by directing the flow of each stream toward at least one other stream. In other words, if two streams are used the outlets must be in the same plane but may be at various angles from each other. For example, the two streams could be at 60, 90, 120, or 180 degree angles from each other, although any angle may be used. If four streams are used, two of the streams could be combined at the top of the impingement chamber and two more combined midway down the impingement channel **10** or all four streams could be combined at the top of the impingement chamber. While it is preferred that the orifice cone and extension tubes be perpendicular to the impingement channel, that is not required.

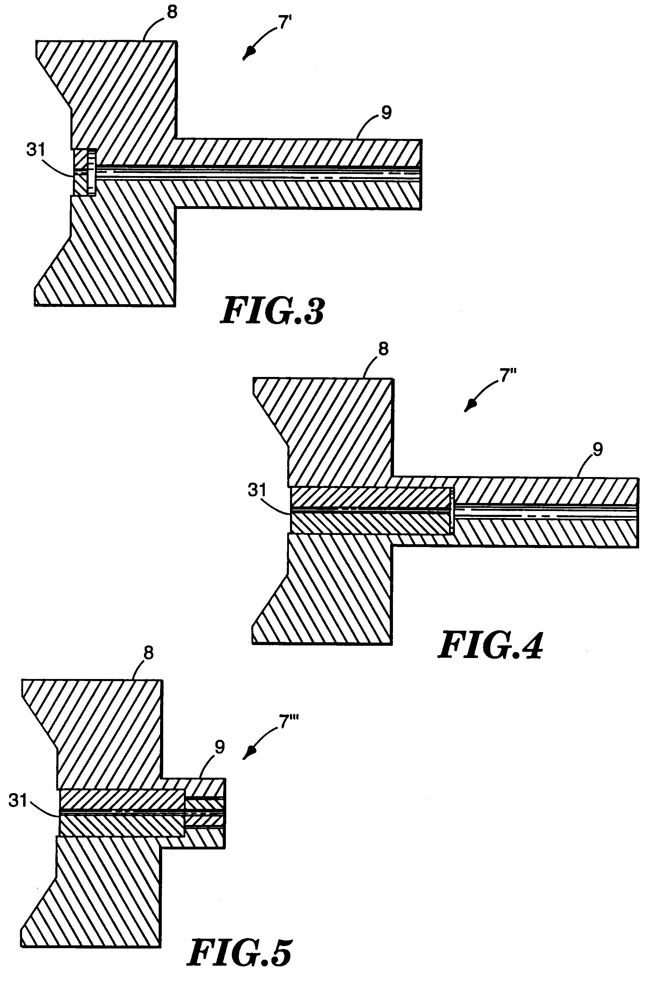

Figures 3 through 5 show a variety of embodiments of the jet impingement orifice assembly **7**. The orifice cone **8** and the extension tube **9** may be separate components but are generally combined into one component The orifice **31** is secured within the orifice cone **8**. The orifice should be constructed of a hard and durable material. Suitable materials include sapphire, tungsten carbide, stainless steel, etc. The shape of the orifice can be circular, hexagonal, oval, square, etc. However, circular orifices may be desirable due to relative ease of manufacture. The inner diameter of the orifice is determined in part by the size of the individual particulates being processed. For preparation of a magnetic pigment dispersion preferred orifice diameters range from 0.005 through 0.05 inches (0.1-1 mm).

If more than one jet impingement assembly is used in series, it is preferable that the orifice inner diameter in each succeeding impingement chamber is the same size or smaller than the orifice inner diameter in the preceding impingement chamber. The length of the orifice may be increased if desired to maintain a higher velocity for the process stream for a longer period of time. The velocity of the stream when passing through the orifice is generally greater than 1000 ft/sec (300 m/s).

The extension tube **9** maintains the velocity of the jet until immediately prior to the point where the individual streams impinge each other. The inner portion of the extension tube may be of the same or different material than the orifice and may be of the same or slightly different diameter than the orifice. The length of the extension tube and the distance from the exit of the extension tube to the center of the impingement chamber has an effect on the degree of dispersion obtained. For magnetic pigment dispersions the distance from the exit of the extension tube to the center of the impingement zone is preferably no greater than 0.3 inches (7.6 mm), more preferably no greater than 0.1 inches (2.54 mm), and most preferably no greater than 0.025 inches (0.6 mm).

The inventors have found that, although not necessary, it may be beneficial to provide a filter upstream from the initial impingement chamber assembly. The purpose of this filter is primarily to remove relatively large (i.e., greater than 100 µm) contaminants without removing pigment particles. As an alternative to this, the inventors have developed a modified input manifold **2** as shown in Figure 6 which comprises a filter. This input manifold **2** is comprises a removable cover means **26** which allows for removal and replacement of the filter element **29** which is held in the housing **29**.

### Examples

### Example 1

A magnetic recording tape was produced for comparative purposes using standard processing procedures, i.e. combining and sand milling coating solution ingredients, followed by coating onto a polyethylene terephthalate (PET) substrate. The dispersion ingredients included: HM31™ (metal pigment from Dowa); vinyl binder; a urethane type binder; and MEK/xylene solvents. The weight percent solids was about 33%.

A second magnetic recording tape was prepared. The dispersion ingredients were the same as above. This dispersion was initially sandmilled. The dispersion was then pressurized to about 5000 psi (34.5 MPa), for Example A, and 10,000 psi (68.9 MPa), for Example B, and forced through a series of 2 impingement chambers having orifices with diameters of 0.022 in (0.056 cm) and 0.018 in (0.046), respectively. The impinged dispersion was cooled in a heat exchanger to 20°C. The viscosity was measured on an ICI viscometer at 10,000 s⁻¹. The orientation ratio was measured on a VSM™ vibrating sample magnetometer. The smoothness was measured on a Wyko Inferometer. The results are shown below. The inventive process clearly provides viscosity advantages and produces a tape with better pigment orientation than does the comparative process.

| SAMPLE | VISCOSITY (cP) | ORIENTATION RATIO | SMOOTHNESS (nm) |
|---|---|---|---|
| Comparative | 23 | 1.37 | 9.1 |
| Example A | 11 | 1.67 | 7.0 |
| Example B | 12 | 1.69 | 6.0 |

### Example 2

Tapes C were produced using a dispersion of TODA B-3 metal pigment, with a 60/40 vinyl/urethane binder system, 3% by weight lubricant, and 5% head cleaning agent based on metal pigment weight in a MEK/toluene 90/10 solvent blend. The dispersion was preprocessed in a sandmill. The dispersion was then pressurized to 7000 psi and passed through a series of two impingement chambers having orifice diameters of 0.022 in (0.056 cm) and 0.018 in (0.046), respectively. The dispersion was cooled in a heat exchanger and then passed through a series of Nippon Roki filters, with the last filter being a Nippon Roki HT-05. The dispersion was coated onto polyethylene terephthalate substrate. These tapes had from about 0.8x10⁷ to about 1.5x10⁷ bits between errors.

Tapes D were produced using a dispersion of TODA B-3 metal pigment, a self-wetting vinyl/urethane binder system, and 5% head cleaning agent based on metal pigment weight. This dispersion was processed in the same manner as dispersion C. However, the last filter was the more restrictive Nippon Roki HT-04. Tapes produced using this dispersion had from 2.5x10⁷ to about 4.0x10⁷ bits between errors.

### Example 3

The following backcoat formulation was prepared (the amounts are in parts by weight):

| | |
|---|---|
| Carbon black | 34 |
| Al₂O₃ | 3.2 |
| wetting agents | 1.7 |
| vinyl binder | 19.8 |
| urethane binder | 29.8 |
| CB601 crosslinking agent | 11.5 |

The ingredients were combined at 12-15 weight % solids in an 85/8.5/5/1.5 blend of tetrahydrofuran/methyl ethyl ketone/toluene/propyleneglycol monomethyl ether acetate. Two dispersions were prepared by sand milling. One of the dispersions was processed through the sand mill for extra passes to attain a smoother dispersion. These dispersions were then coated onto the backside of a magnetic recording tape. Each of the dispersions was coated with and without passing through a jet impingement system before coating. The samples may be identified as follows:

| Sample | milling | jet impingement |
|---|---|---|
| 3A | standard | no |
| 3B | standard | yes |
| 3C | extra | no |
| 3D | extra | yes |

The coated tape was dried and wound. The tape was ten unwound and tested for air bleed time (ABT), magnetic side roughness on an interferometer (Mag. RQ), backside roughness on an interferometer (BS RQ), and backside gloss at 60° and 70°. The magnetic side roughness after winding can be indicative of any impressions created on the magnetic layer by the roughness of the backside. The results are shown below:

| Sample | ABT (sec) | Mag. RQ (nm) | BS RQ (µm) | 60° gloss | 70° gloss |
|---|---|---|---|---|---|
| 3A* | 564 | 11.8 | 0.35 | 32 | 76.5 |
| 3B | 419 | 11.2 | 0.28 | 45 | 86 |
| 3C | 670 | 9.3 | 0.20 | 75 | 98 |
| 3D | 731 | 9.0 | 0.19 | 80 | 100.5 |

| | | | | | |
|---|---|---|---|---|---|
| * Average for two separately coated samples. | | | | | |

### Example 4

The following backcoat formulation was prepared (the amounts are in parts by weight):

| | |
|---|---|
| Carbon black | 38 |
| Al₂O₃ | 1.6 |
| wetting agents | 0.04 |
| TiO₂ | 9.5 |
| lecithin | 1.5 |
| nitrocellulose | 14.7 |
| urethane binder | 29.8 |
| Amical 48 fungicide | 0.2 |
| NR320 crosslinking agent | 11.5 |

The ingredients were combined at 11-13 weight % solids in a 68/16/2/12.5/1.5 blend of tetrahydrofuran/methyl ethyl ketone/toluene/cyclohexanone/propylene-glycol monomethyl ether acetate. Two dispersions were prepared by sand milling. One of the dispersions was processed through the sand mill for extra passes to attain a smoother dispersion. These dispersions were then coated onto the backside of a magnetic recording tape. Each of the dispersions was coated with and without passing through a jet impingement system before coating. The samples may be identified as follows:

| Sample | milling | jet impingement |
|---|---|---|
| 4A | standard | no |
| 4B | standard | yes |
| 4C | extra | no |
| 4D | extra | yes |

The coated tape was dried and wound. The tape was ten unwound and tested for air bleed time (ABT), magnetic side roughness on an interferometer (Mag. RQ), backside roughness on an interferometer (BS RQ), and backside gloss at 60° and 70°. The magnetic side roughness after winding can be indicative of any impressions created on the magnetic layer by the roughness of the backside. The results are shown below:

| Sample | ABT (sec) | Mag. RQ (nm) | BS RQ (µm) | 60° gloss | 70° gloss |
|---|---|---|---|---|---|
| 4A* | 424 | 13.2 | 0.45 | 34 | 81 |
| 4B | 525 | 11.6 | 0.41 | 36.5 | 82.5 |
| 4C | 694 | 11.3 | 0.31 | 62.5 | 93.5 |
| 4D | 738 | 10.4 | 0.24 | 78 | 99 |

| | | | | | |
|---|---|---|---|---|---|
| * Average for two separately coated samples. | | | | | |

## Claims

1. A method of processing a dispersion comprising pigment, polymeric binder, and solvent, wherein the method comprises the steps of:
a) combining the dispersion components;
b) mixing the combined components to form a dispersion;
c) pressuring the dispersion; and
d) forcing the pressurized mixture through at least two impingement chamber assemblies (1a, 1b, 1c), wherein in each assembly (1a, 1b, 1c) the dispersion is divided into at least two streams, each stream is forced through an orifice assembly (7) which comprises an orifice (31), and on exit from the orifice (31) the streams impinge upon each other, wherein the orifices (31) are the same size or smaller than the orifices (31) in the preceding impingement chamber assembly (1a, 1b, 1c).

2. The method of claim 1 further comprising the step of coating the dispersion onto a substrate after completing step d) and before reagglomeration of the particles occurs.

3. The method of claim 2 further comprising the step of filtering the dispersion prior to coating.

4. The method of claim 1 further comprising the step of filtering the impinged mixture through ultrarestrictive filters (42).

5. The method of claim 1, 2, 3, or 4 further comprising cooling the dispersion in a heat exchanger (40) after forcing the dispersion through the impingement chamber assemblies (1a, 1b, 1c)

6. The method of claim 1, 2, 3, or 4 wherein after forcing the mixture through at lease one impingement chamber at least a portion of the dispersion is recycled to the pressurizing step.

7. The method of claim 1, 2, 3, or 4 wherein the forcing step comprises dividing the dispersion into two independent streams that impinge upon each other at an angle of 180 degrees from each other.

8. The method of claim 3 or 4 in which the filtering step removes 0.8 mm particles at 99% efficiency.

9. The method of claim 1, 2, 3 or 4 in which the forcing step comprises forcing the streams through an orifice assembly (7) which comprises an orifice cone (8) holding the orifice (31)

10. The method of claim 9 in which the forcing step comprises forcing the streams through orifice assemblies (7) which further comprise an extension tube (9)

11. The method of claim 9 in which the forcing step comprises forcing the streams through orifices (31) which have diameters ranging from 0.1 through 1.0 mm.

12. The method of claim 1, 2, 3, or 4 in which the forcing step comprises impinging the streams upon each other no further than 7.6 mm from the exit of the orifice assemblies (7)

13. The method of claims 1, 2, 3, or 4 wherein the pigment is a magnetic pigment or carbon black.

14. The method of claim 2 or 3 in which the dispersion is coated onto the substrate no more than 10 minutes after processing

15. The method of claim 1, 2, 3, or 4 wherein the orifice (31) is cylindrical.

16. An apparatus comprising
a) a pump (22, 23) which feeds a dispersion to
b) at least one impingement chamber assembly (1a, 1b, 1c) comprising (i) an input manifold (2) where the pressurized stream is divided into two or more independent streams, (ii) an output manifold (6) where the independent streams are impingingly recombined in an impingement chamber after passing through orifice assemblies (7) which comprise an orifice (31), and (iii) at least two connecting passages (3) between the input manifold (2) and the output manifold (6);
c) a filtering means following the impingement chamber assembly; (1a, 1b, 1c) and
d) a means for coating the processed dispersion onto a substrate.

17. The apparatus of claim 16 comprising multiple impingement chamber assemblies (1a, 1b, 1c) in series.

18. The apparatus of claim 16 further comprising a heat exchanger (40) between the impingement chamber assembly (1a, 1b, 1c) and the filtering means.

19. The apparatus of claim 17 further comprising pressure sensors between impingement chamber assemblies (1a, 1b, 1c)

20. The apparatus of claim 16 wherein the filtering means is capable of removing 99% of 0.8 mm particles.

21. The apparatus of claim 16 in which the orifice assemblies (7) comprise an orifice cone (8) holding an orifice (31).

22. The apparatus of claim 21 in which the orifice (31) is constructed from materials selected from the group consisting of synthetic sapphire, tungsten carbide, diamond. stainless steel, and ceramic material.

23. The apparatus of claim 21 wherein the orifice (31) is cylindrical and has an inner diameter in the range from 0.1 to 1.0 mm.

24. The apparatus of claim 21 wherein the orifice assembly (7) further comprises an extension tube (9)

25. The apparatus of claim 24 wherein the inner diameter of the extension tube (9) is in the range from 0.1 to 1.0 mm.

26. The apparatus of claim 16 in which the free distance from the exit of the orifice assembly (7) to the center of the impingement channel (10) is less than 7.6 mm.

## Patentansprüche

1. Verfahren zur Verarbeitung einer Dispersion, die ein Pigment, ein polymeres Bindemittel und ein Lösungsmittel umfaßt, wobei das Verfahren die Schritte des:
a) Vereinigens der Komponenten der Dispersion;
b) Vermischens der vereinigten Komponenten unter Bildung einer Dispersion;
c) Unter-Druck-Setzens der Dispersion und
d) Pressens der unter Druck gesetzten Mischung durch wenigstens zwei Prallkammer-Baugruppen (1a, 1b, 1c) umfaßt,
wobei die Dispersion in jeder Baugruppe (1a, 1b, 1c) in wenigstens zwei Ströme geteilt wird, jeder Strom durch eine Öffnungsbaugruppe (7) gepreßt wird, die eine Öffnung (31) umfaßt, und wobei beim Austreten aus der Öffnung (31) die Ströme aufeinander aufprallen, wobei die Öffnungen (31) dieselbe Größe wie die Öffnungen (31) in der vorhergehenden Prallkammer-Baugruppe (1a, 1b, 1c) aufweisen oder kleiner als diese sind.

2. Verfahren nach Anspruch 1, weiterhin umfassend den Schritt des Auftragens der Dispersion auf ein Substrat nach der Vervollständigung von Schritt d) und vor dem Auftreten einer erneuten Agglomeration der Teilchen.

3. Verfahren nach Anspruch 2, weiterhin umfassend den Schritt des Filtrierens der Dispersion vor dem Auftragen.

4. Verfahren nach Anspruch 1, weiterhin umfassend den Schritt des Filtrierens der aufgeprallten Mischung durch ultrarestriktive Filter (42) .

5. Verfahren nach Anspruch 1, 2, 3 oder 4, weiterhin umfassend das Abkühlen der Dispersion in einem Wärmetauscher (40) nach dem Pressen der Dispersion durch die Prallkammer-Baumgruppen (1a, 1b, 1c).

6. Verfahren nach Anspruch 1, 2, 3 oder 4, wobei nach dem Pressen der Mischung durch wenigstens eine Prallkammer wenigstens ein Teil der Dispersion zu dem Schritt des Unter-Druck-Setzens zurückgeführt wird.

7. Verfahren nach Anspruch 1, 2, 3 oder 4, wobei der Schritt des Pressens das Teilen der Dispersion in zwei unabhängige Ströme umfaßt, die in einem Winkel von 180° aufeinander aufprallen.

8. Verfahren nach Anspruch 3 oder 4, wobei im Schritt des Filtrierens Teile von 0,8 mm mit einer Wirksamkeit von 99 % entfernt werden.

9. Verfahren nach Anspruch 1, 2, 3 oder 4, wobei der Schritt des Pressens das Pressen der Ströme durch eine Öffnungsbaugruppe (7) umfaßt, die einen Öffnungskonus (8) umfaßt, der die Öffnung (31) hält.

10. Verfahren nach Anspruch 9, wobei der Schritt des Pressens das Pressen der Ströme durch Öffnungsbaugruppen (7) umfaßt, die weiterhin ein Verlängerungsrohr (9) umfassen.

11. Verfahren nach Anspruch 9, wobei der Schritt des Pressens das Pressen der Ströme durch Öffnungen (31) umfaßt, deren Durchmesser von 0,1 bis 1,0 mm reichen.

12. Verfahren nach Anspruch 1, 2, 3 oder 4, wobei der Schritt des Pressens das Aufeinander-Aufprallender der Ströme nicht weiter als 7,6 mm von ihrem Austritt aus den Öffnungsbaugruppen (7) entfernt umfaßt.

13. Verfahren nach Anspruch 1, 2, 3 oder 4, wobei das Pigment ein magnetisches Pigment oder Ruß ist.

14. Verfahren nach Anspruch 2 oder 3, wobei die Dispersion nach nicht mehr als 10 min nach der Verarbeitung auf das Substrat aufgetragen wird.

15. Verfahren nach Anspruch 1, 2, 3 oder 4, wobei die Öffnung (31) zylindrisch ist.

16. Vorrichtung, umfassend
a) eine Pumpe (22, 23), die eine Dispersion zu
b) wenigstens einer Prallkammer-Baugruppe (1a, 1b, 1c) fördert, die (i) einen Eingangsverteiler (2), wo der unter Druck gesetzte Strom in zwei oder mehr unabhängige Ströme geteilt wird, (ii) einen Ausgangsverteiler (6), wo die unabhängigen Ströme unter Aufprall in einer Prallkammer rekombiniert werden, nachdem sie durch die eine Öffnung (31) umfassenden Öffnungsbaugruppen (7) gelangen, und (iii) wenigstens zwei Verbindungskanäle (3) zwischen dem Eingangsverteiler (2) und dem Ausgangsverteiler (6) umfaßt;
c) ein Filtriermittel, das der Prallkammer-Baugruppe (1a, 1b, 1c) folgt; und
d) ein Mittel zum Auftragen der verarbeiteten Dispersion auf ein Substrat.

17. Vorrichtung nach Anspruch 16, umfassend Mehrfach-Prallkammer-Baugruppen (1a, 1b, 1c) in Serie.

18. Vorrichtung nach Anspruch 16, weiterhin umfassend einen Wärmetauscher (40) zwischen der Prallkammer-Baugruppe (1a, 1b, 1c) und dem Filtriermittel.

19. Vorrichtung nach Anspruch 17, weiterhin umfassend Drucksensoren zwischen den Prallkammer-Baugruppen (1a, 1b, 1c).

20. Vorrichtung nach Anspruch 16, wobei das Filtriermittel 99 % der Teilchen von 0,8 mm entfernen kann.

21. Vorrichtung nach Anspruch 16, wobei die Öffnungsbaugruppen (7) einen Öffnungskegel (8) umfassen, der eine Öffnung (31) hält.

22. Vorrichtung nach Anspruch 21, wobei die Öffnung (31) aus Materialien konstruiert ist, die aus der aus synthetischem Saphir, Wolframcarbid, Diamant, rostfreiem Stahl und keramischem Material bestehenden Gruppe ausgewählt sind.

23. Vorrichtung nach Anspruch 21, wobei die Öffnung (31) zylindrisch ist und einen Innendurchmesser im Bereich von 0,1 bis 1,0 mm aufweist.

24. Vorrichtung nach Anspruch 21, wobei die Öffnungsbaugruppe (7) weiterhin ein Verlängerungsrohr (9)umfaßt.

25. Vorrichtung nach Anspruch 24, wobei der Innendurchmesser des Verlängerungsrohrs (9) im Bereich von 0,1 bis 1,0 mm liegt.

26. Vorrichtung nach Anspruch 16, wobei der Anstand zwischen dem Austritt der Öffnungsbaugruppe (7) und dem Mittelpunkt des Aufprallkanals (10) weniger als 7,6 mm beträgt.

## Revendications

1. Procédé de mise en oeuvre d'une dispersion comprenant un pigment, un liant polymère et un solvant, lequel procédé comprend les étapes consistant à:
a) combiner les composants de la dispersion;
b) mélanger les composants combinés pour former une dispersion;
c) mettre la dispersion sous pression; et
d) envoyer le mélange sous pression dans au moins deux assemblages d'enceinte de collision (1a, 1b, 1c), dans lesquels dans chaque assemblage (1a, 1b, 1c) la dispersion est divisée en au moins deux courants, chaque courant est envoyé dans un assemblage d'orifice (7) qui comprend un orifice (31) et, lors de la sortie de l'orifice (31), les courants entrent en collision les uns avec les autres, dans lesquels les orifices (31) ont la même taille que les orifices (31), ou une taille inférieure aux orifices (31), de l'assemblage d'enceinte de collision précédent (1a, 1b, 1c).

2. Procédé de la revendication 1 comprenant, en outre, l'étape d'application de la dispersion sur un substrat à la fin de l'étape d) et avant l'apparition d'une réagglomération des particules.

3. Procédé de la revendication 2 comprenant, en outre, l'étape de filtration de la dispersion avant le revêtement.

4. Procédé de la revendication 1 comprenant, en outre, l'étape de filtration du mélange entré en collision à travers des filtres extrêmement fins (42).

5. Procédé de la revendication 1, 2, 3 ou 4 comprenant, en outre, le refroidissement de la dispersion dans un échangeur de chaleur (40) après avoir envoyé la dispersion à travers les assemblages d'enceinte de collision (1a, 1b, 1c).

6. Procédé de la revendication 1, 2, 3 ou 4, dans lequel après l'envoi du mélange au travers d'au moins une enceinte de collision, au moins une partie de la dispersion est recyclée dans l'étape de mise sous pression.

7. Procédé de la revendication 1, 2, 3 ou 4, dans lequel l'étape d'envoi comprend la division de la dispersion en deux courants indépendants qui entrent en collision l'un avec l'autre sous un angle de 180 degrés l'un avec l'autre.

8. Procédé de la revendication 3 ou 4, dans lequel l'étape de filtration élimine les particules de 0,8 mm avec une efficacité de 99%.

9. Procédé de la revendication 1, 2, 3 ou 4, dans lequel l'étape d'envoi comprend l'envoi des courants dans un assemblage d'orifice (7) qui comprend un cône d'orifice (8) maintenant l'orifice (31).

10. Procédé de la revendication 9, dans lequel l'étape d'envoi comprend l'envoi des courants au travers des assemblages d'orifice (7) qui comprennent en outre un tube d'extension (9).

11. Procédé de la revendication 9, dans lequel l'étape d'envoi comprend l'envoi des courants au travers des orifices (31) qui ont des diamètres s'échelonnant de 0,1 à 1,0 mm.

12. Procédé de la revendication 1, 2, 3 ou 4, dans lequel l'étape d'envoi comprend la collision des courants les uns avec les autres à une distance inférieure à 7,6 mm de la sortie des assemblages d'orifice (7).

13. Procédé de la revendication 1, 2, 3 ou 4, dans lequel le pigment est un pigment magnétique ou du noir de carbone.

14. Procédé de la revendication 2 ou 3, dans lequel la dispersion est appliquée sur le substrat moins de 10 minutes après la préparation.

15. Procédé de la revendication 1, 2, 3 ou 4, dans lequel l'orifice (31) est cylindrique.

16. Appareil comprenant
a) une pompe (22, 23) qui charge une dispersion dans
b) au moins un assemblage d'enceinte de collision (1a, 1b, 1c) comprenant (i) un collecteur d'entrée (2) où le courant sous pression est divisé en deux courants indépendants ou plus, (ii) un collecteur de sortie (6) où les courants indépendants sont recombinés en entrant en collision dans une enceinte de collision après avoir traversé les assemblages d'orifice (7) qui comprennent un orifice (31), et (iii) au moins deux passages de raccordement (3) entre le collecteur d'entrée (2) et le collecteur de sortie (6);
c) un moyen de filtration après l'assemblage d'enceinte de collision (1a, 1b, 1c); et
d) un moyen d'application de la dispersion mise en oeuvre sur un substrat.

17. Appareil de la revendication 16 comprenant plusieurs assemblages d'enceinte de collision (1a, 1b, 1c) en série.

18. Appareil de la revendication 16 comprenant, en outre, un échangeur de chaleur (40) entre l'assemblage d'enceinte de collision (1a, 1b, 1c) et le moyen de filtration.

19. Appareil de la revendication 17 comprenant, en outre, des capteurs de pression entre les assemblages d'enceinte de collision (1a, 1b, 1c).

20. Appareil de la revendication 16, dans lequel le moyen de filtration est capable d'éliminer 99% des particules de 0,8 mm.

21. Appareil de la revendication 16, dans lequel les assemblages d'orifice (7) comprennent un cône d'orifice (8) maintenant un orifice (31).

22. Appareil de la revendication 21, dans lequel l'orifice (31) est fait de matériaux choisis dans le groupe constitué du saphir synthétique, du carbure de tungstène, du diamant, de l'acier inoxydable et d'une matière céramique.

23. Appareil de la revendication 21, dans lequel l'orifice (31) est cylindrique et a un diamètre intérieur dans la gamme de 0,1 à 1,0 mm.

24. Appareil de la revendication 21, dans lequel l'assemblage d'orifice (7) comprend, en outre, un tube d'extension (9).

25. Appareil de la revendication 24, dans lequel le diamètre intérieur du tube d'extension (9) est dans la gamme de 0,1 à 1,0 mm.

26. Appareil de la revendication 16, dans lequel la distance libre entre la sortie de l'assemblage d'orifice (7) et le centre du canal de collision (10) est inférieure à 7,6 mm.
